# FASCICULE DE BREVET EUROPEEN

(11) **EP 3 019 922 B1**
(45) Date de publication et mention de la délivrance du brevet: **04.09.2019**
(21) Numéro de dépôt: 14749922.2
(22) Date de dépôt: 09.07.2014
(51) Int. Cl.: G05D 23/13, F16K 11/076, B64D 13/08

(54) **TROMPE DE MÉLANGE DE GAZ DESTINÉE NOTAMMENT À UN SYSTÈME DE CHAUFFAGE**
GASMISCHPUMPE, INSBESONDERE FÜR EINE HEIZUNGSANLAGE
GAS MIXING PUMP, PARTICULARLY FOR A HEATING SYSTEM

(30) Priorité: 10.07.2013 FR 1356776
(43) Date de publication de la demande: 18.05.2016
(73) Titulaire: Liebherr-Aerospace Toulouse SAS, 31200 Toulouse (FR)
(72) Inventeur: PEYRE, Antoine, F-81000 Albi (FR)
(74) Mandataire: Cabinet Plasseraud
(86) Numéro de dépôt international: PCT/FR2014/051762
(87) Numéro de publication internationale: WO 2015/004388

(56) Documents cités:
- WO-A1-98/37312
- FR-A1- 2 026 587

## Description

La présente invention concerne une trompe de mélange de gaz destinée notamment à un système de chauffage.

Le domaine de la présente invention est plus particulièrement la gestion de l'air dans un habitacle d'un aéronef, par exemple un hélicoptère mais aussi un avion. Pour chauffer l'intérieur d'un tel habitacle, il est connu de prélever de l'air chaud en sortie des moteurs et de récupérer des calories inutilisées pour chauffer l'habitacle de l'aéronef correspondant.

L'air chaud en sortie de moteur ne peut pas être utilisé directement pour le chauffage de l'habitacle. Cet air est, d'une part, à une pression trop élevée et, d'autre part, à une température trop élevée pour pouvoir être envoyé tel quel dans un habitacle. Il est alors prévu de mélanger cet air chaud sous pression à de l'air frais prélevé à l'extérieur de l'habitacle à une pression et une température moindres.

Pour faire varier la température de l'air injecté dans l'habitacle, une vanne de régulation de position peut être utilisée. Une telle vanne se trouve le plus souvent sur une ligne d'air chaud en amont d'un dispositif de mélange d'air chaud et d'air froid, appelé par la suite trompe de mélange, et est par exemple actionnée électriquement.

Une trompe de mélange comporte par exemple un injecteur d'air chaud, par exemple à section fixe, disposé dans une conduite d'air frais. L'air chaud étant à une pression relativement élevée, il entraine avec lui de l'air frais lorsqu'il est injecté dans la conduite d'air frais et se mélange à cet air frais avant d'être introduit dans l'habitacle de l'aéronef. Dans un tel système, lorsqu'une vanne de régulation modifie le flux d'air chaud injecté dans la conduite d'air frais en amont de l'injecteur, ladite vanne crée une perte de charge plus ou moins élevée et influe ainsi sur la pression du flux d'air chaud au niveau de l'injecteur.

Dans une trompe de mélange telle celle décrite au paragraphe précédent, si on limite le flux d'air chaud, on abaisse également la pression d'air chaud dans l'injecteur, et par là la vitesse d'injection d'air, et on peut alors provoquer un désamorçage de la trompe, c'est-à-dire que le flux d'air chaud sortant de l'injecteur n'a plus une vitesse suffisante pour arriver à entrainer suffisamment d'air frais. L'air en sortie est alors trop chaud (absence d'air frais dans le flux de sortie) pouvant provoquer une coupure du système de chauffage pour éviter une surchauffe de composants se trouvant en aval de la trompe de mélange.

Une trompe de mélange de l'art antérieur est par exemple divulguée par le document FR-626 267.

Le document EP-2 150 867 divulgue lui aussi une trompe de mélange. Le problème technique à l'origine de l'invention décrite dans ce document de l'art antérieur est de proposer une trompe de mélange de gaz avec laquelle il est possible de modifier la pression de l'air délivré en sortie de trompe selon une valeur de consigne. Ce document montre une trompe comprenant une enceinte de mélange de gaz; débouchant dans ladite enceinte de mélange des conduites d'alimentation de ladite enceinte en gaz HP (Haute Pression) et IP (acronyme anglais de Intermediate Pression soit en français pression intermédiaire) ; une conduite de sortie des gaz mélangés ; un actionneur pneumatique agencé dans ladite conduite d'alimentation en gaz HP, comprenant un piston mobile solidaire d'un obturateur dont la position dans ladite conduite détermine une section de passage de gaz HP vers ladite enceinte de mélange, une chambre de commande dudit piston mobile adaptée pour être alimentée en pression qui détermine la position dudit piston mobile ; un circuit pneumatique agencé entre une source de pression et ladite chambre de commande, caractérisée en ce que ledit circuit pneumatique comprend au moins une vanne de fuite agencée adaptée pour générer une fuite dans le circuit pneumatique qui permet de modifier la pression délivrée à ladite chambre de commande.

Dans d'autres domaines techniques, il existe également des systèmes de mélange d'air chaud et d'air frais. Dans des moteurs de véhicule automobiles par exemple, on connait par le document FR-2 026 587 notamment une boite de soupape sensible à la température comprenant une soupape oscillante disposée de façon à réguler le débit d'au moins deux courants fluides à des températures différentes mais variables pénétrant dans une conduite commune. Un élément sensible à la température se trouve dans la conduite commune pour déterminer la position de la soupape, cet élément étant disposé de façon à tendre à maintenir une gamme de températures prédéterminée dans le mélange fluide traversant la conduite commune, les températures des courants entrants étant telles qu'elles permettent de maintenir cette gamme de température prédéterminée. Le réglage de température se fait ici sur une plage prédéterminée réduite. Le système ne permet pas d'avoir une large plage de températures de sortie. En outre, il ne réalise pas d'aspiration et il n'y a donc pas d'effet de trompe lors de son fonctionnement.

Le document WO-98/37312 concerne une vanne de régulation de turbine à gaz de combustion, destinée à réguler la température d'entrée d'une turbine à gaz à chauffe indirecte, située à l'entrée du mandrin de ladite turbine. Cette vanne de régulation est utile dans des systèmes de production d'énergie à turbine à gaz à chauffe indirecte. Ici aussi, le système décrit ne permet pas de réaliser une aspiration et donc un effet de trompe. Par contre, contrairement au document précédent, il permet de réaliser une variation de la consigne de température en sortie.

Le but de la présente invention est quant à lui de fournir une trompe de mélange, c'est-à-dire un système réalisant une injection par effet de trompe dans lequel une admission forcée -d'air chaud par exemple- induit une aspiration d'un flux gazeux -d'air frais par exemple-, permettant une plage de fonctionnement en température aussi large que possible sans provoquer de désamorçage du système de chauffage correspondant, notamment pour un système de chauffage. Avantageusement, le système proposé fonctionnera aussi bien lorsque les besoins en chauffage sont importants (température extérieure, et donc température de l'air frais, très basse, par exemple -40°C) que lorsque les besoins en chauffage sont modérés (température extérieure modérée, par exemple 15°C).

De préférence, la trompe de mélange proposée sera de conception aussi simple que possible. Son encombrement et/ou son poids seront avantageusement modérés. La trompe selon l'invention sera également de préférence facile à réguler et/ou d'une grande fiabilité et/ou d'un prix de revient modéré.

À cet effet, la présente invention propose une trompe de mélange comportant une conduite d'air, dite conduite d'air frais, une arrivée d'air, dite arrivée d'air chaud, débouchant dans la conduite d'air frais ainsi que des moyens d'injection d'air en provenance de l'arrivée d'air chaud dans la conduite d'air frais.

Selon la présente invention, l'arrivée d'air chaud débouche dans une enceinte disposée au moins partiellement dans la conduite d'air frais, et les moyens d'injection présentent au moins une ouverture permettant de relier l'intérieur de l'enceinte à l'intérieur de la conduite d'air frais ainsi que des moyens permettent de modifier la section de passage à travers l'ouverture au nombre d'au moins une reliant l'intérieur de l'enceinte à l'intérieur de la conduite d'air frais.

On réalise de la sorte un système d'injection à section variable dans lequel l'air chaud est placé dans une enceinte sous haute pression correspondant à la pression de délivrance de l'air chaud. Ainsi, même lorsque la section de passage de l'air chaud est faible, la pression de l'air chaud reste importante permettant ainsi d'atteindre des vitesses d'injection importantes et suffisantes pour entrainer une masse d'air frais. Le système proposé permet ainsi de résoudre les problèmes de désamorçage.

Pour favoriser un bon mélange des deux flux gazeux, la conduite d'air frais est une conduite s'étendant longitudinalement selon une première direction et on prévoit que l'enceinte présente une forme tubulaire cylindrique circulaire s'étendant selon une seconde direction sensiblement perpendiculaire à la première direction. Pour une bonne répartition du flux d'air chaud dans le flux d'air frais, l'enceinte est formée à l'intérieur d'un tube traversant la conduite d'air frais.

Il est question ici d'une enceinte disposée dans la conduite d'air frais car ses dimensions ne sont pas négligeables par rapport à celles de la conduite d'air frais. À titre d'exemple non limitatif, l'enceinte présente par exemple un diamètre compris entre 1/8^{ème} et la moitié du diamètre de la conduite d'air frais au niveau où se trouve ladite enceinte. En outre, l'enceinte présente des dimensions relativement importantes par rapport au diamètre de chaque ouverture. On peut par exemple prévoir que l'enceinte présente un diamètre qui est au moins le double de celui de la plus grande ouverture. Il est possible ainsi d'assurer un flux d'air chaud suffisant même lorsqu'il y a plusieurs ouvertures.

Pour d'une part mieux pouvoir répartir le flux d'air chaud dans le flux d'air frais et d'autre part adapter au mieux la section de passage de l'air chaud, plusieurs ouvertures sont de préférence réalisées pour relier l'intérieur de l'enceinte à l'intérieur de la conduite d'air frais. Le système est alors, comme indiqué plus haut, un système d'injection à section variable mais aussi un système multi-injecteurs.

Dans une trompe de mélange selon la présente invention, pour favoriser l'aspiration de l'air frais par l'air chaud sortant de l'enceinte par chaque ouverture, il est préférable que chaque ouverture soit réalisée du côté aval de l'enceinte par rapport au flux d'air dans la conduite d'air frais.

Une forme de réalisation préférée prévoit que l'ouverture au nombre d'au moins une est réalisée sur une paroi fixe, et que les moyens permettant de modifier la section de passage à travers l'ouverture reliant l'intérieur de l'enceinte à l'intérieur de la conduite d'air frais comportent une paroi mobile épousant la forme de la paroi fixe et pouvant coulisser par rapport à la paroi fixe en venant plus ou moins recouvrir chaque ouverture de la paroi fixe. Cette forme de réalisation permet de réaliser une trompe de mélange compacte mais aussi d'un poids limité. Lorsque pour cette forme de réalisation avantageuse la conduite est une conduite s'étendant longitudinalement selon une première direction et que l'enceinte présente une forme tubulaire cylindrique circulaire s'étendant selon une seconde direction sensiblement perpendiculaire à la première direction, alors les moyens permettant de modifier la section de passage à travers l'ouverture au nombre d'au moins une comportent par exemple un obturateur se présentant sous la forme d'un tube cylindrique circulaire dont le diamètre extérieur correspond sensiblement au diamètre intérieur de l'enceinte et qui présente au moins une fenêtre dont la forme et la position sont telles que dans une position de l'obturateur chaque ouverture de l'enceinte est obturée et dans une autre position de l'obturateur chaque ouverture est entièrement découverte. On réalise de la sorte un système de type boisseau/obturateur comparable à un système de robinet à tournant (appelé aussi robinet à boisseau). On peut alors aussi prévoir que la trompe de mélange selon la présente invention comporte un actionneur permettant de faire tourner l'obturateur de manière à ouvrir progressivement chaque ouverture de l'enceinte depuis une position où chaque ouverture est obturée à une position où chaque ouverture est entièrement découverte. L'actionneur est par exemple commandé par un système d'acquisition et de contrôle coopérant avec un capteur de température placé en aval du système d'injection.

La présente invention concerne en outre un système de chauffage pour aéronef, notamment pour hélicoptère, caractérisé en ce qu'il comporte une trompe de mélange telle que décrite ci-dessus.

Des détails et avantages de la présente invention apparaitront mieux de la description qui suit, faite en référence au dessin schématique annexé sur lequel :
La figure 1 est un schéma de principe illustrant la présente invention,
La figure 2 est une vue en coupe longitudinale d'une forme de réalisation préférée d'une trompe de mélange selon la présente invention,
La figure 3 est une coupe longitudinale en perspective de la trompe de mélange de la figure 2,
La figure 4 est une coupe transversale en perspective de la trompe des figures 2 et 3, et
Les figures 5A à E illustrent le principe de fonctionnement d'une trompe de mélange illustrée sur les figures précédentes.

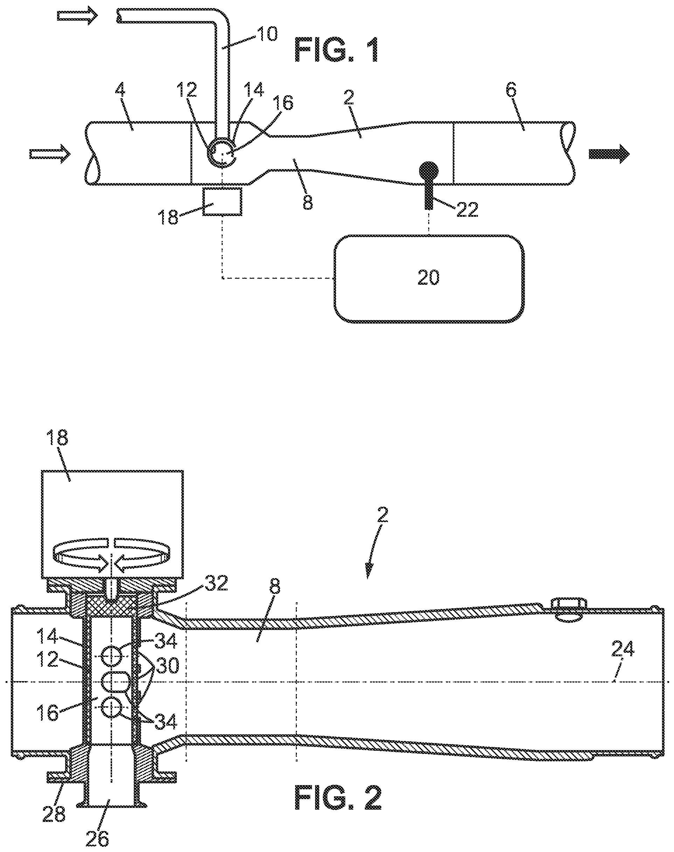

La figure 1 illustre la structure générale d'une forme de réalisation préférée d'une trompe de mélange 2 selon la présente invention.

La trompe de mélange 2 représentée est montée en aval d'une arrivée d'air frais 4 et en amont d'une sortie d'air tempéré 6. Elle comporte une conduite principale, au sein de laquelle se trouve une chambre de mélange 8, une amenée d'air chaud 10 ainsi que des moyens pour mélanger à un flux gazeux provenant de l'arrivée d'air frais 4 un flux gazeux conduit par l'amenée d'air chaud 10 à la trompe de mélange 2. Les moyens de mélange comportent quant à eux un obturateur 12 disposé dans un boisseau 14 et définissant une enceinte 16.

Un actionneur 18 est prévu pour régler la position de l'obturateur 12 dans le boisseau 14. Cet actionneur 18 est commandé par un système d'acquisition et de contrôle 20 associé notamment à un capteur de température 22. Cet actionneur 18 est de préférence électrique. Toutefois, selon l'environnement, il est possible d'avoir par exemple un dispositif pneumatique avec par exemple un actionneur pneumatique simple effet, un embiellage et un régulateur électropneumatique permettant de faire varier la pression dans une chambre de l'actionneur pneumatique. Il est ainsi possible de régler la position de l'obturateur 12 via l'embiellage.

La figure 2 montre plus en détails la trompe de mélange 2 de la figure 1. On reconnaît ici une conduite longitudinale, la conduite principale, avec son axe longitudinal 24. Il est prévu que de l'air circule dans la conduite principale de la gauche vers la droite sur les figures 1 et 2 comme indiqué par des flèches sur la figure 1. L'air pénètre alors tout d'abord, en sortie de l'arrivée d'air 4 dans une conduite d'air frais en aval de laquelle débouche l'amenée d'air chaud 10. La conduite d'air frais converge alors vers la chambre de mélange 8. Une zone divergente est enfin prévue entre la chambre de mélange 8 et une zone de raccordement à la sortie d'air tempéré 6.

En aval de la conduite d'air frais se trouvent les moyens de mélange avec le boisseau 14 et son obturateur 12.

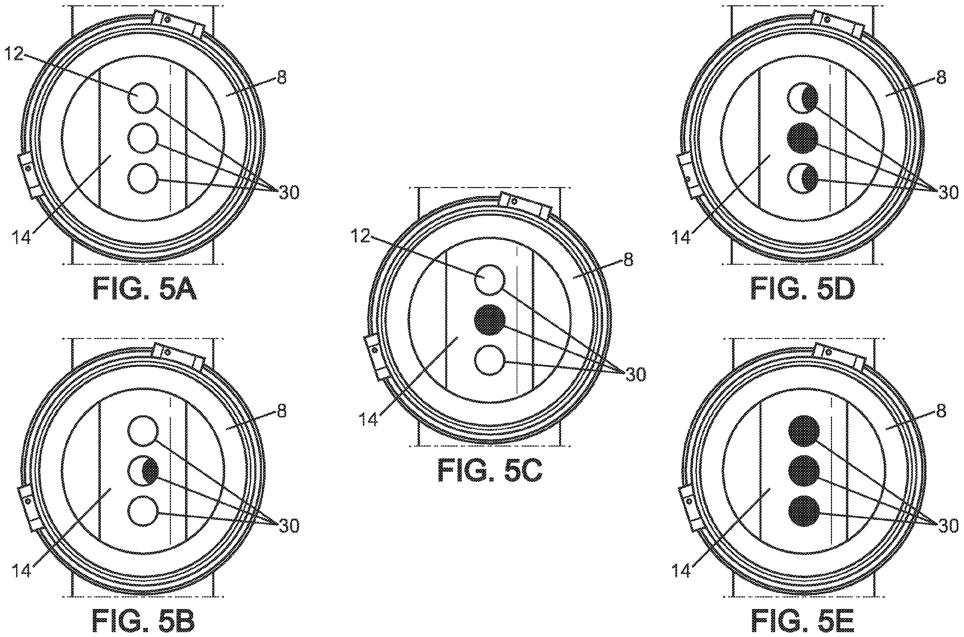

Le boisseau 14, dans la forme de réalisation préférée illustrée ici, forme une enceinte 16 alimentée en air chaud par une entrée 26 raccordée à l'amenée d'air chaud 10 illustrée sur la figure 1. Le raccord à l'amenée d'air chaud 10 se réalise par exemple par l'intermédiaire d'une bride 28. Le boisseau 14 se présente sous la forme d'un tube cylindrique circulaire traversant l'extrémité aval de la conduite d'air frais en s'étendant de préférence sensiblement perpendiculairement à l'axe longitudinal 24 (l'axe du boisseau 14 coupe de préférence l'axe longitudinal 24 mais pour des raisons d'encombrement, ou autres, un décalage peut être envisagé). Des ouvertures 30, ici au nombre de trois, sont réalisées dans la paroi du boisseau 14 de manière à permettre une liaison entre l'intérieur de l'enceinte 16 et l'intérieur de la conduite d'air frais. Comme illustré sur les figures 5A à E, ces ouvertures 30 sont par exemple sensiblement circulaires (en vue de face). Elles sont disposées dans la paroi du boisseau 14 et donc de l'enceinte 16 qui se trouve du côté aval du flux d'air frais dans la conduite d'air frais. Pour des raisons aérauliques, ces ouvertures 30 sont de préférence centrées par rapport à l'axe longitudinal 24 et le cas échéant par rapport au plan contenant l'axe longitudinal 24 et l'axe (transversal) du boisseau 14. Ces ouvertures 30 sont réalisées du côté aval par rapport au flux gazeux dans la conduite d'air frais.

Le boisseau 14 présente par exemple un diamètre intérieur, correspondant au diamètre de l'enceinte 16, qui correspond par exemple au quart du diamètre intérieur de la conduite d'air frais dans lequel il se trouve. Ce diamètre du boisseau 14 est donné à titre illustratif. Il appartient à l'homme du métier de le dimensionner en fonction des performances à atteindre. Ce diamètre est non négligeable par rapport au diamètre de la conduite d'air frais et est relativement important, par exemple au moins le double, par rapport au diamètre des ouvertures mettant en communication l'enceinte 16 avec la conduite d'air frais.

L'obturateur 12 est disposé à l'intérieur du boisseau 14. Il présente une paroi cylindrique circulaire dont le diamètre extérieur correspond sensiblement au diamètre intérieur du boisseau 14 de manière à pouvoir coulisser dans le boisseau 14 en étant guidé par ce dernier. Pour un bon coulissement et un bon guidage, on peut par exemple réaliser l'obturateur 12 en graphite et le boisseau 14 en acier inoxydable. La paroi cylindrique de l'obturateur 12 est ouverte du côté de l'entrée 26 et est fermée à son extrémité opposée par un fond 32. Ce dernier est mis à profit pour relier l'obturateur 32 avec l'actionneur 18 qui entraine l'obturateur 32 en rotation autour de son axe (qui correspond à l'axe du boisseau 14).

L'obturateur 12 a pour but de permettre d'obturer entièrement les ouvertures 30 et donc d'empêcher tout flux gazeux de l'enceinte 16 vers l'intérieur de la conduite d'air frais mais aussi de libérer entièrement ces ouvertures 30 pour que l'air de l'enceinte 16 puisse passer dans la conduite d'air frais avec une section de passage maximale (autorisée par les ouvertures 30). Toutes les positions intermédiaires doivent de préférence pouvoir être prises : on peut ici prévoir un réglage continu de la position de l'obturateur 12 dans son boisseau 14 ou bien prévoir des positions prédéfinies permettant alors un réglage incrémental de l'obturateur 12.

Pour permettre d'obturer et de découvrir plus ou moins entièrement les ouvertures 30, l'obturateur 12 comporte des fenêtres 34 illustrées sur les figures 2 à 5. Dans la forme de réalisation illustrée, on a trois fenêtres 34 correspondant chacune à une ouverture 30. On remarque que la fenêtre 34 disposée au centre, c'est-à-dire entre les deux autres fenêtres 34, présente une forme de trou oblong tandis que les deux autres fenêtres 34 sont sensiblement circulaires. Comme déjà indiqué, les fenêtres 34 sont dimensionnées de préférence de telle sorte qu'elles puissent chacune libérer entièrement le passage réalisé par l'ouverture 30 correspondante entre l'enceinte 16 et la conduite d'air frais.

Le fait d'avoir une fenêtre 34 en forme de trou oblong permet d'ouvrir une ouverture 30 avant les autres tout en permettant aussi d'avoir les trois ouvertures 30 entièrement ouvertes. Les figures 5A à E illustrent la coopération du boisseau 14 avec son obturateur 12.

La figure 5A illustre une position où l'obturateur 12 vient entièrement recouvrir les ouvertures 30. Aucun flux gazeux ne peut passer de l'enceinte 16 vers la conduite d'air frais même lorsque les gaz (l'air) dans l'enceinte 16 est sous pression (en général de l'ordre de plusieurs bars -1 bar=10⁵Pa-).

Dans la position illustrée sur la figure 5B, seule l'ouverture 30 au centre est partiellement découverte. Un passage de faible section permet alors à du gaz sous pression dans l'enceinte 16 de passer à l'intérieur de la conduite d'air frais.

Dans la forme de réalisation proposée de l'invention, on prévoit que l'ouverture 30 centrale soit tout d'abord entièrement découverte avant de commencer à découvrir les ouvertures 30 latérales. La figure 5C illustre la position dans laquelle l'ouverture 30 centrale est entièrement libérée mais les deux ouvertures 30 latérales sont entièrement obturées.

La figure 5D illustre l'ouverture 30 entièrement découverte et les ouvertures 30 latérales encore partiellement obturées tandis que sur la figure 5E toutes les ouvertures 30 sont entièrement découvertes.

Le passage de la position illustrée par la figure 5A à la position illustrée sur la figure 5E peut correspondre par exemple à une rotation de 90° de l'obturateur 12. Cette valeur est bien entendu donnée à titre purement illustratif et non limitatif.

L'homme du métier comprendra que la "loi d'ouverture" des ouvertures 30 est uniquement un exemple d'application. On pourrait avoir une ouverture simultanée des trois ouvertures 30, ou bien une ouverture successive, ou bien

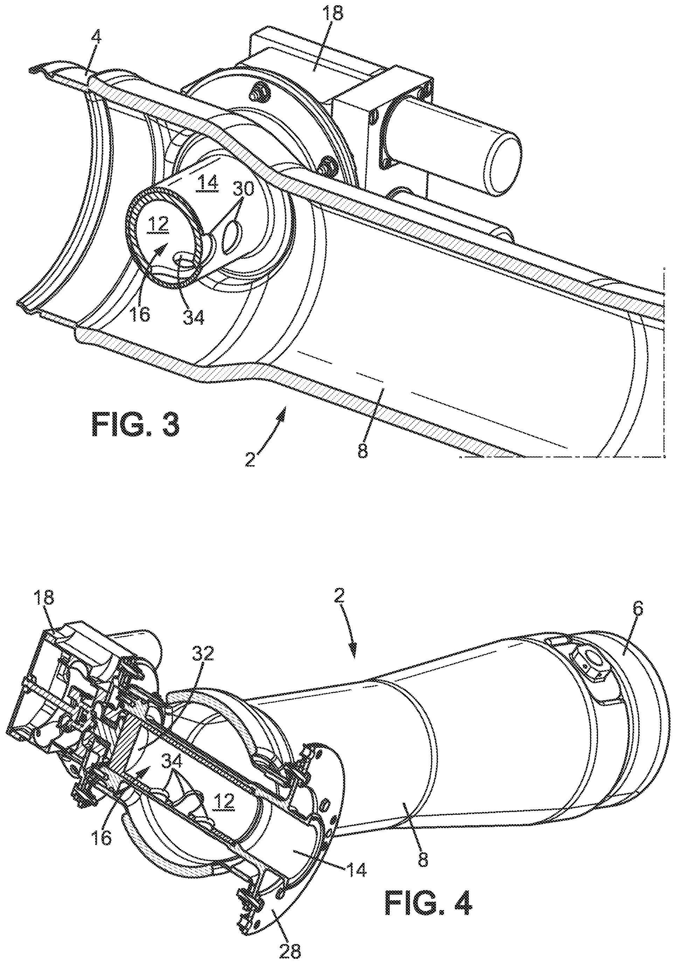

La figure 3 montre en perspective un raccord de la trompe de mélange 2 décrite plus haut avec l'arrivée d'air 4 tandis que la figure 4 illustre le raccord de cette trompe de mélange 2 avec une sortie d'air tempérée 6. Ces vues permettent aussi de mieux voir les formes des différents éléments mis en oeuvre dans la forme de réalisation illustrée de la présente invention.

Comme il ressort de la description qui précède, la trompe de mélange 2 réalisée est un dispositif mélangeur multi-injecteurs et à section d'injection variable. Chaque ouverture 30 forme en effet un injecteur et il a été vu que l'obturateur 12 permettait de faire varier la section de chacun de ces injecteurs.

En aval de l'enceinte 16 et des moyens de mélange des deux flux gazeux, la conduite d'air frais de la trompe de mélange 2 converge vers la chambre de mélange 8. Cette chambre de mélange 8 est alimentée, d'une part, par un gaz à haute pression et à haute température (appelé par la suite air chaud) arrivant par l'amenée d'air chaud 10 en passant par l'enceinte 16 et au travers d'au moins une ouverture 30 et, d'autre part, par un gaz à pression et température ambiantes (appelé par la suite air frais) qui arrive par l'arrivée d'air 4.

Le système d'injection de l'air chaud dans la conduite d'air frais est intégré dans la conduite d'air frais et traverse celle-ci de part en part. En variante non couverte par les revendications, on pourrait envisager un système s'étendant partiellement dans la conduite d'air frais, par exemple sur une partie seulement du diamètre de cette conduite.

En fonctionnement, de l'air chaud arrive sous pression dans l'enceinte 16 par l'entrée 26 et sort radialement de cette enceinte 16 selon la direction que l'on souhaite donner en sortie au flux d'air tempéré résultant du mélange d'air chaud avec de l'air frais. La section de passage de l'air chaud est contrôlée par l'obturateur 12, lui-même commandé par l'actionneur 18. L'air chaud sous pression, en sortant par les injecteurs (ouvertures 30) entraine avec lui de l'air frais et se mélange à lui dans la chambre de mélange 8 plus ou moins selon la direction longitudinale donnée par l'axe longitudinal 24 de la conduite principale.

Le système d'injection présenté plus haut en référence au dessin annexé permet sur toute la course angulaire de l'obturateur 12 une injection d'air chaud à haute pression symétrique par rapport à un plan contenant un axe de symétrie de la conduite principale et/ou de la conduite d'air frais et perpendiculaire à l'axe de rotation de l'obturateur 12. Ceci est réalisé grâce à l'agencement des ouvertures 30 dans le boisseau 14. Il est préférable dans l'application à un système de chauffage pour un aéronef, par exemple un hélicoptère, d'ouvrir d'abord les injecteurs d'air chaud proches de l'axe de révolution de la conduite d'air frais (ou de la chambre de mélange) puis progressivement et de manière symétrique les injecteurs plus éloignés de cet axe de révolution. On peut ainsi prévoir un plus grand nombre d'injecteurs (par rapport à la forme de réalisation illustrée) pour s'adapter par exemple à une taille de conduite plus grande ou pour mieux affiner le réglage du flux d'air chaud. Inversement, on peut aussi prévoir dans certaines configurations de n'avoir qu'une seule ou bien deux ouverture(s) 30.

Le système proposé permet d'avoir une section d'injection nulle et de passer progressivement à une section d'injection maximale, correspondant à l'ouverture complète des injecteurs (ouvertures 30).

Une trompe de mélange selon la présente invention permet de réaliser des mélanges sur une large plage de fonctionnement de températures et permet ainsi une bonne régulation de la température en sortie de la trompe quelles que soient les conditions extérieures et celles de l'air chaud prélevé sur le moteur. Il convient ici de dimensionner les ouvertures réalisées dans le boisseau pour garantir un chauffage suffisant. À l'inverse, pour des chauffages modérés, la conception du système permet d'éviter les problèmes de désamorçage. On remarque en effet que la pression de l'air chaud dans l'enceinte dépend uniquement de la pression dans la conduite d'amenée d'air chaud et ne varie quasiment pas avec la section de passage d'air chaud vers la chambre de mélange. Lorsque la section d'injection est faible, la pression d'injection est importante et permet d'obtenir des vitesses d'injection importantes garantissant un entrainement de l'air frais.

Le système proposé permet en outre d'obtenir, par rapport à des systèmes de l'art antérieur comparables, un gain à la fois de poids et d'encombrement. Le système proposé est en outre de conception simple et est fiable.

## Revendications

1. Trompe de mélange (2) comportant une conduite d'air, dite conduite d'air frais (4), une arrivée d'air, dite arrivée d'air chaud (10), débouchant dans la conduite d'air frais (4) ainsi que des moyens d'injection d'air en provenance de l'arrivée d'air chaud (10) dans la conduite d'air frais, l'arrivée d'air chaud (10) débouchant dans une enceinte (16) disposée au moins partiellement dans la conduite d'air frais, et les moyens d'injection présentant au moins une ouverture (30) permettant de relier l'intérieur de l'enceinte (16) à l'intérieur de la conduite d'air frais ainsi que des moyens (12) permettant de modifier la section de passage à travers l'au moins une ouverture (30) reliant l'intérieur de l'enceinte (16) à l'intérieur de la conduite d'air frais,
ladite trompe étant **caractérisée en ce que** ladite enceinte (16) est formée à l'intérieur d'un tube (14) traversant la conduite d'air frais (4).

2. Trompe de mélange (2) selon la revendication 1, **caractérisée en ce que** la conduite d'air frais est une conduite s'étendant longitudinalement selon une première direction (24) et **en ce que** l'enceinte (16) présente une forme tubulaire cylindrique circulaire s'étendant selon une seconde direction sensiblement perpendiculaire à la première direction (24).

3. Trompe de mélange (2) selon l'une des revendications 1 ou 2, **caractérisée en ce que** l'enceinte présente un diamètre compris entre 1/8^{ème} et la moitié du diamètre de la conduite d'air frais au niveau où se trouve ladite enceinte.

4. Trompe de mélange (2) selon l'une des revendications 1 à 3, **caractérisée en ce que** plusieurs ouvertures (30) sont réalisées pour relier l'intérieur de l'enceinte (16) à l'intérieur de la conduite d'air frais.

5. Trompe de mélange (2) selon l'une des revendications 1 à 4, **caractérisée en ce que** chaque ouverture (30) est réalisée du côté aval de l'enceinte (16) par rapport au flux d'air dans la conduite d'air frais.

6. Trompe de mélange (2) selon l'une des revendications 1 à 5, **caractérisée en ce que** l'ouverture (30) au nombre d'au moins une est réalisée sur une paroi fixe, et **en ce que** les moyens permettant de modifier la section de passage à travers l'ouverture (30) reliant l'intérieur de l'enceinte (16) à l'intérieur de la conduite d'air frais comportent une paroi mobile épousant la forme de la paroi fixe et pouvant coulisser par rapport à la paroi fixe en venant plus ou moins recouvrir chaque ouverture (30) de la paroi fixe.

7. Trompe de mélange (2) selon les revendications 2 et 6, **caractérisée en ce que** les moyens permettant de modifier la section de passage à travers l'ouverture (30) au nombre d'au moins une comportent un obturateur (12) se présentant sous la forme d'un tube cylindrique circulaire dont le diamètre extérieur correspond sensiblement au diamètre intérieur de l'enceinte (16) et qui présente au moins une fenêtre (34) dont la forme et la position sont telles que dans une position de l'obturateur (12) chaque ouverture (30) de l'enceinte (16) est obturée et dans une autre position de l'obturateur (12) chaque ouverture (30) est entièrement découverte.

8. Trompe de mélange (2) selon la revendication 7, **caractérisée en ce qu'**elle comporte un actionneur (18) permettant de faire tourner l'obturateur (12) de manière à ouvrir progressivement chaque ouverture (30) de l'enceinte (16) depuis une position où chaque ouverture (30) est obturée à une position où chaque ouverture (30) est entièrement découverte.

9. Système de chauffage pour aéronef, notamment pour hélicoptère, **caractérisé en ce qu'**il comporte une trompe de mélange (2) selon l'une des revendications 1 à 8.

## Patentansprüche

1. Mischpumpe (2), umfassend einen Luftkanal, genannt Frischluftkanal (4), eine Luftzuführung, genannt Warmluftzuführung (10), die in den Frischluftkanal (4) mündet,
sowie Mittel zum Einspritzen von aus der Warmluftzuführung (10) stammender Luft in den Frischluftkanal,
wobei die Warmluftzuführung (10) in ein Gehäuse (16) mündet, das wenigstens teilweise in dem Frischluftkanal angeordnet ist, und wobei die Einspritzmittel Folgendes aufweisen: wenigstens eine Öffnung (30), die es ermöglicht, das Innere des Gehäuses (16) mit dem Inneren des Frischluftkanals zu verbinden, sowie Mittel (12), die es ermöglichen, den Durchlassquerschnitt durch die wenigstens eine Öffnung (30) zu verändern, die das Innere des Gehäuses (16) mit dem Inneren des Frischluftkanals verbindet,
wobei die Pumpe **dadurch gekennzeichnet ist, dass** das Gehäuse (16) im Inneren eines Rohrs (14) gebildet ist, das den Frischluftkanal (4) durchquert.

2. Mischpumpe (2) nach Anspruch 1, **dadurch gekennzeichnet, dass** der Frischluftkanal ein Kanal ist, der sich längs in einer ersten Richtung (24) erstreckt, und dass das Gehäuse (16) eine rohrförmige kreiszylindrische Form aufweist, die sich in einer zweiten Richtung erstreckt, die im Wesentlichen senkrecht zur ersten Richtung (24) ist.

3. Mischpumpe (2) nach einem der Ansprüche 1 oder 2, **dadurch gekennzeichnet, dass** das Gehäuse einen Durchmesser aufweist, der zwischen einem Achtel und der Hälfte des Durchmessers des Frischluftkanals in dem Bereich, in dem sich das Gehäuse befindet, beträgt.

4. Mischpumpe (2) nach einem der Ansprüche 1 bis 3, **dadurch gekennzeichnet, dass** mehrere Öffnungen (30) gebildet sind, um das Innere des Gehäuses (16) mit dem Inneren des Frischluftkanals zu verbinden.

5. Mischpumpe (2) nach einem der Ansprüche 1 bis 4, **dadurch gekennzeichnet, dass** jede Öffnung (30) an der in Bezug auf den Luftstrom in dem Frischluftkanal stromabwärtige Seite des Gehäuses (16) gebildet ist.

6. Mischpumpe (2) nach einem der Ansprüche 1 bis 5, **dadurch gekennzeichnet, dass** die wenigstens eine Öffnung (30) in einer feststehenden Wand gebildet ist und dass die Mittel, die es ermöglichen, den Durchlassquerschnitt durch die Öffnung (30) zu verändern, die das Innere des Gehäuses (16) mit dem Inneren des Frischluftkanals verbindet, eine bewegliche Wand umfassen, die an die Form der feststehenden Wand angepasst ist und in Bezug auf die feststehende Wand gleiten kann, indem sie jede Öffnung (30) der feststehenden Wand mehr oder weniger bedeckt.

7. Mischpumpe (2) nach den Ansprüchen 2 und 6, **dadurch gekennzeichnet, dass** die Mittel, die es ermöglichen, den Durchlassquerschnitt durch die wenigstens eine Öffnung (30) zu verändern, ein Verschlussorgan (12) umfassen, das in der Form eines kreiszylindrischen Rohrs vorliegt, dessen Außendurchmesser im Wesentlichen dem Innendurchmesser des Gehäuses (16) entspricht, und das wenigstens ein Fenster (34) aufweist, dessen Form und Position derart sind, dass in einer Position des Verschlussorgans (12) jede Öffnung (30) des Gehäuses (16) verschlossen ist und in einer anderen Position des Verschlussorgans (12) jede Öffnung (30) zur Gänze freigegeben ist.

8. Mischpumpe (2) nach Anspruch 7, **dadurch gekennzeichnet, dass** sie ein Stellglied (18) umfasst, das es ermöglicht, das Verschlussorgan (12) ausgehend von einer Position, in der jede Öffnung (30) verschlossen ist, in eine Position, in der jede Öffnung (30) zur Gänze freigegeben ist, zu drehen, sodass jede Öffnung (30) des Gehäuses (16) schrittweise geöffnet wird.

9. Heizsystem für ein Luftfahrzeug, insbesondere für einen Hubschrauber, **dadurch gekennzeichnet, dass** es eine Mischpumpe (2) nach einem der Ansprüche 1 bis 8 umfasst.

## Claims

1. Mixing pump (2) comprising an air duct, referred to as a cool air duct, an air intake leading to the cool air duct, referred to as a hot air intake (10), and means for injecting air from the hot air intake (10) into the cool air duct,
wherein the hot air intake (10) leads to a chamber (16) arranged at least partially in the cool air duct, and wherein the injection means have at least one opening (30) for connecting the interior of the chamber (16) to the interior of the cool air duct as well as means (12) for modifying the flow area through the at least one opening (30) connecting the interior of the chamber (16) to the interior of the cool air duct,
said pump being **characterised in that** said chamber (16) is preferably formed inside a tube (14) traversing the cool air duct (4).

2. Mixing pump (2) according to claim 1, **characterised in that** the cool air duct is a pipe extending longitudinally in a first direction (24) and **in that** the chamber (16) has a circular cylindrical tubular shape extending in a second direction substantially perpendicular to the first direction (24).

3. Mixing pump (2) according to one of claims 1 or 2, **characterised in that** the chamber has a diameter of between 1/8th and one-half the diameter of the cool air duct at the location of said chamber.

4. Mixing pump (2) according to one of claims 1 to 3, **characterised in that** a plurality of openings (30) are formed for connecting the interior of the chamber (16) to the interior of the cool air duct.

5. Mixing pump (2) according to one of claims 1 to 4, **characterised in that** each opening (30) is formed in the downstream side of the chamber (16) relative to the flow of air in the cool air duct.

6. Mixing pump (2) according to one of claims 1 to 5, **characterised in that** the at least one opening (30) is formed in a fixed wall, and **in that** the means for modifying the flow area through the opening (30) connecting the interior of the chamber (16) to the interior of the cool air duct comprise a movable wall matching the shape of the fixed wall and slidable relative to the fixed wall so as to cover each opening (30) of the fixed wall to a greater or lesser extent.

7. Mixing pump (2) according to claims 2 and 6, **characterised in that** the means for modifying the flow area through the at least one opening (30) comprise a valve (12) in the form of a circular cylindrical tube having an outer diameter substantially corresponding to the inner diameter of the chamber (16) and having at least one window (34) of a shape and position such that in one position of the valve (12) each opening (30) of the chamber (16) is covered and in another position of the valve (12) each opening (30) is completely uncovered.

8. Mixing pump (2) according to claim 7, **characterised in that** it comprises an actuator (18) for rotating the valve (12) so as to gradually expose each opening (30) of the chamber (16), from a position where each opening (30) is covered to a position where each opening (30) is fully uncovered.

9. Heating system for an aircraft, in particular for a helicopter, **characterised in that** it comprises a mixing pump (2) according to one of claims 1 to 8.
